(19) Europäisches Patentamt
European Patent Office
Office européen des brevets

(11) **EP 2 966 578 B1**

(12) **EUROPEAN PATENT SPECIFICATION**

(45) Date of publication and mention of the grant of the patent:
**24.06.2020 Bulletin 2020/26**

(21) Application number: **15175709.3**

(22) Date of filing: **07.07.2015**

(51) Int Cl.:
*G06F 40/109* (2020.01)   *G06F 40/166* (2020.01)
*G06F 40/177* (2020.01)   *G06K 9/00* (2006.01)
*G06K 9/32* (2006.01)   *H04N 1/393* (2006.01)

(54) **INFORMATION PROCESSING APPARATUS, INFORMATION PROCESSING METHOD, PROGRAM, AND STORAGE MEDIUM**

INFORMATIONSVERARBEITUNGSVORRICHTUNG, INFORMATIONSVERARBEITUNGSVERFAHREN, PROGRAMM UND SPEICHERMEDIUM

APPAREIL DE TRAITEMENT D'INFORMATIONS, PROCÉDÉ DE TRAITEMENT D'INFORMATIONS, PROGRAMME ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.07.2014 JP 2014139869**
**16.09.2014 JP 2014188069**

(43) Date of publication of application:
**13.01.2016 Bulletin 2016/02**

(73) Proprietor: **CANON KABUSHIKI KAISHA**
**Ohta-ku**
**Tokyo 146-8501 (JP)**

(72) Inventors:
• **NAKATSUKA, Tadanori**
  **Ohta-ku, Tokyo (JP)**
• **YAMAZAKI, Taeko**
  **Ohta-ku, Tokyo (JP)**
• **HONDA, Kinya**
  **Ohta-ku, Tokyo (JP)**
• **KAWASAKI, Hiromasa**
  **Ohta-ku, Tokyo (JP)**

(74) Representative: **Hitching, Peter Matthew et al**
**Canon Europe Ltd**
**European Patent Department**
**3 The Square**
**Stockley Park**
**Uxbridge Middlesex UB11 1ET (GB)**

(56) References cited:
**US-A1- 2003 123 727    US-A1- 2011 002 547**

• **"Pages '09 User Guide", , 20 July 2011 (2011-07-20), pages 1-279, XP055225236, Retrieved from the Internet: URL:https://manuals.info.apple.com/en_US/Pages09_UserGuide.pdf [retrieved on 2015-11-02]**
• **"cisdem pdf converter OCR for Mac", , 27 May 2014 (2014-05-27), XP055225445, Retrieved from the Internet: URL:http://web.archive.org/web/20140527094054/http://www.cisdem.com/pdf-converter-ocr-mac.html [retrieved on 2015-11-03]**

**Description**

BACKGROUND OF THE INVENTION

Field of the Invention

The present invention relates to an information processing apparatus for editing a table region in an image.

Description of the Related Art

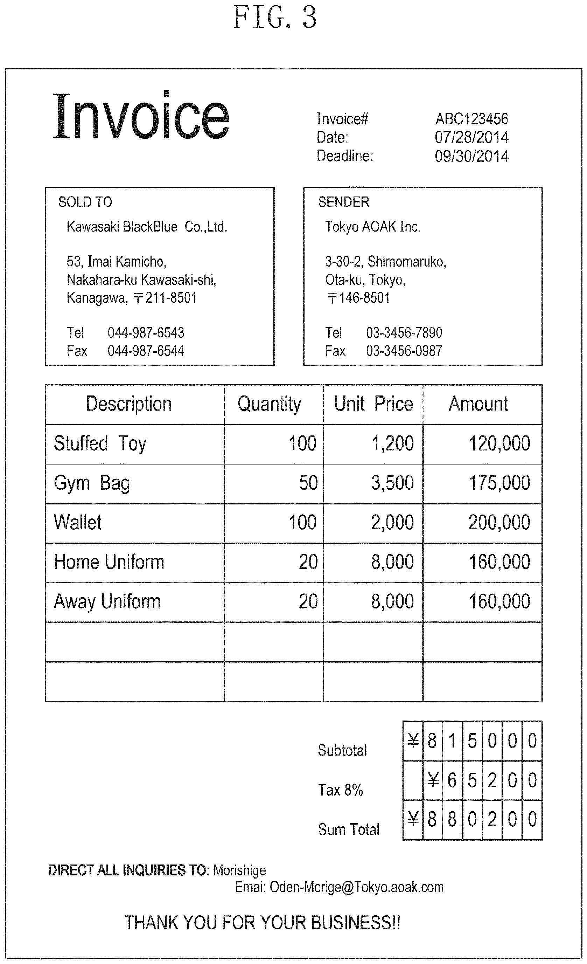

Fig. 3 illustrates an example of a scan image. There is a case where this scan image is to be edited. Japanese Patent Application Laid-Open No. 2001-094760 discusses a function of editing a scan image. Pages '09 User Guide describes an application for creating and editing a document. Document US 2003/0123727 describes a table recognition apparatus. US2011/002547 discloses a technique of discriminating a table region from an input image and generating a workbook document for that table.

More specifically, with the function discussed in Japanese Patent Application Laid-Open No. 2001-094760, a table region formed of a plurality of ruled lines in the scan image is identified, and character recognition is performed on characters inside the table region. The each ruled line forming the table region is further vectorized. Then, the scan image is displayed in the left-side window, and a vectorization result and recognized characters are displayed in the right-side window (Fig. 5 in Japanese Patent Application Laid-Open No. 2001-094760). When a user edits characters in the right-side window, the identified table region is deleted from the left-side window. Then, a table to which edited characters are added is generated, and then the generated table is displayed on the left-side window.

In a technique discussed in Japanese Patent Application Laid-Open No. 2001-094760, if the position of a table region is incorrectly determined, an image at a position not intended by the user is deleted.

SUMMARY OF THE INVENTION

According to a first aspect of the present invention, there is provided an information processing apparatus as specified in claims 1 to 5. According to a second aspect of the present invention, there is provided a method for controlling an information processing apparatus as specified in clams 6 to 10. According to a third aspect of the present invention, there is provided a computer program comprising instructions for causing a computer to function as specified in clams 11. According to a fourth aspect of the present invention, there is provided a computer-readable storage medium storing a program for causing a computer to function as specified in clams 12.

Further features of the present invention will become apparent from the following description of exemplary embodiments with reference to the attached drawings.

BRIEF DESCRIPTION OF THE DRAWINGS

Fig. 1 is a block diagram illustrating a configuration of a copying machine.
Fig. 2 is a block diagram illustrating a configuration of an information processing apparatus.
Fig. 3 is an example of a scan image.
Fig. 4 illustrates a result of region division on the scan image.
Fig. 5 illustrates a display screen for displaying frames of recognized cells.
Fig. 6 illustrates a display screen displayed when a recognized cell is selected.
Fig. 7 illustrates a screen displaying a post-edit text.
Fig. 8 is a flowchart illustrating main processing.
Fig. 9 is a flowchart illustrating editing processing.
Fig. 10 is a flowchart illustrating processing for changing the position of the recognized cell.
Fig. 11 is a flowchart illustrating processing for displaying the post-edit text.
Fig. 12 is a flowchart illustrating processing for changing the position of the post-edit text.
Fig. 13 illustrates another example of a scan image.
Fig. 14 is a supplementary view illustrating a method for determining a reference line.
Fig. 15 is a flowchart according to a third exemplary embodiment.

DESCRIPTION OF THE EMBODIMENTS

First of all, terms will be defined below.

Original characters refer to character images in a scan image.

Recognized characters refer to characters corresponding to character codes (character recognition result) acquired by performing character recognition (optical character recognition (OCR) processing) on original characters, or characters corresponding to the relevant character codes displayed in an editing window. These recognized characters are displayed on the editing window (on an editing region) having an editing window text size (the editing window text size means a text size set for the editing window). Recognized cells refer to bounded areas identified by performing image processing on a scanned image.

"Editing a text" refers to a user's action to delete the recognized characters from the editing window and then input substitutional characters in the editing window. "A post-edit text" refers to input substitutional characters or character codes corresponding to the relevant characters. When displayed on the editing window, the post-edit text is displayed with the editing window text size. When displayed on the scan image, the post-edit text is displayed with a scan image text size.

Default values for both the editing window text size and the scan image text size are prestored in a storage unit 202.

An exemplary embodiment for embodying the present invention will be described below with reference to the accompanying drawings.

<Configurations of copying machine and information processing apparatus>

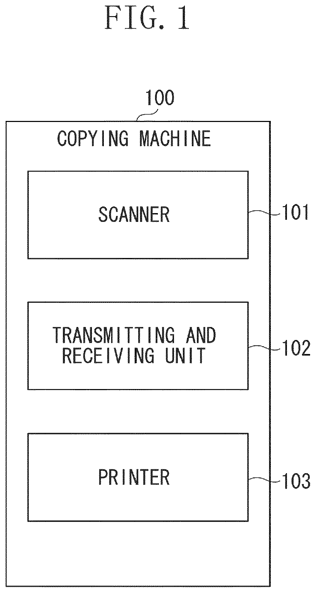

Fig. 1 illustrates a configuration of a copying machine 100 according to a first exemplary embodiment. The copying machine 100 includes a scanner 101, a transmitting and receiving unit 102, and a printer 103.

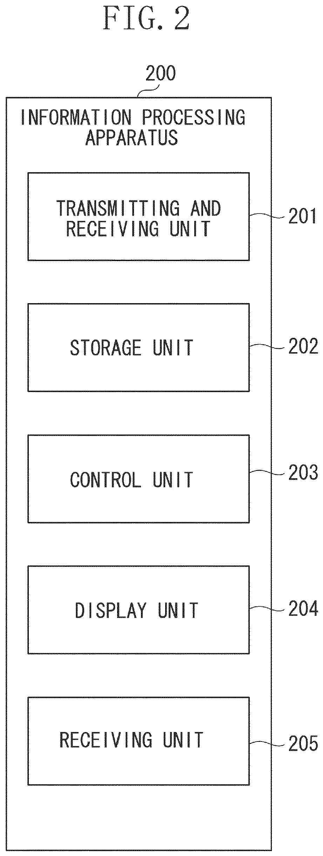

Fig. 2 illustrates a configuration of an information processing apparatus 200 according to the present exemplary embodiment. The information processing apparatus 200 includes a central processing unit (CPU), a read only memory (ROM), and a random access memory (RAM). The CPU loads a program of the information processing apparatus 200 from the ROM and executes the program of the information processing apparatus 200 by using the RAM as a temporary storage area. Processing of each of units 201 to 205 is implemented by the above-described operation. A receiving unit 205 generally includes a keyboard and a mouse, but the present invention is not limited to this configuration. Further, the receiving unit 205 and the display unit 204 may be integrally configured. In this case, the receiving unit 205 and the display unit 204 are collectively referred to as a touch panel, and, in the following exemplary embodiments, a description of a click will be replaced with a description of a touch.

<Process from scan to region division and character recognition>

When the scanner 101 of the copying machine 100 scans a document, a scan image (also referred to as scan image data or a document image) is generated. The transmitting and receiving unit 102 transmits the generated scan image to the information processing apparatus 200. Upon reception of the scan image, the transmitting and receiving unit 201 of the information processing apparatus 200 stores the scan image in the storage unit 202.

A user selects a scan image out of a plurality of scan images stored in the storage unit 202, via the receiving unit 205. Then, a control unit 203 displays the scan image on the display unit 204.

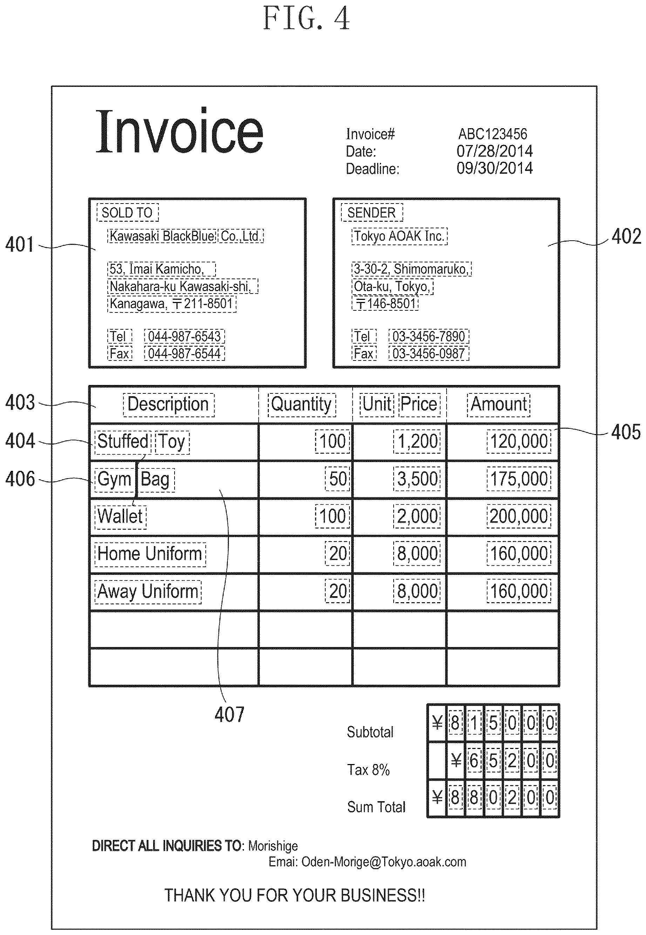

The user issues an instruction to analyze the scan image displayed on the display unit 204, via the receiving unit 205. Then, the control unit 203 executes three pieces of processing: region division, character recognition, and cell recognition frame display, and displays an execution result on the display unit 204. Fig. 3 illustrates an example of a scan image. Fig. 4 illustrates a display result on the display unit 204 after the control unit 203 has executed the three pieces of processing.

<Descriptions of region division processing (1) to (5), character recognition processing (6), and cell recognition frame display processing (7)>

(1) The control unit 203 performs binarization on the scan image to acquire a binary image. As a result of the binarization, a pixel having a brightness value lower than a threshold value in the scan image is a black pixel, and a pixel having a brightness value higher than the threshold value is a white pixel. Although the following descriptions will be made on the premise that the resolution of the scan image is 100 dot per inch (DPI), the scan image is not limited to this resolution.

(2) For the binary image, the control unit 203 tracks the contour of black pixels connected on a 8-connection basis to detect a block of black pixels (black pixel cluster) continuously existing in one of the eight directions. The 8-connection means that pixels of an identical color (black pixels in this case) continuously exist in any one of the eight directions (upper left, left, lower left, below, lower right, right, upper right, and above). On the other hand, the 4-connection means that pixels of an identical color continuously exist in any one of the four directions (left, below, right, and above). In processing (2), an independent black pixel (isolated point) of which all of eight adjacent pixels existing in the eight directions are non-black pixels is recognized as noise, and is not detected. On the other hand, a black pixel of which at least one of eight adjacent pixels existing in the eight directions is a black pixel is detected as a black pixel cluster together with the adjacent black pixel(s).

(3) The control unit 203 detects, out of detected black pixel clusters, a black pixel cluster having length longer than a first threshold length (e.g., 50 pixels = 1.25 cm) and having width narrower than a second threshold length (e.g., 10 pixels = 0.25 cm). The detected black pixel cluster is referred to as a ruled line.

Before determining a ruled line, table region determination may be performed. For example, targeting the black pixel cluster having a size equal to or larger than a predetermined size (minimum size of a presumed table) detected in processing (2), the control unit 203 tracks the contour of white pixels inside the relevant black pixel cluster to detect a plurality of white pixel clusters. Then, the control unit 203 determines whether circumscribed rectangles of a plurality of the white pixel clusters are arranged in a lattice pattern to determine whether the relevant black pixel cluster is a table region. Then, the control unit 203 detects ruled lines from the inside of the table region.

(4) The control unit 203 identifies a region which is surrounded by four ruled lines and does not include any other ruled lines. The identified region is referred to as a recognized cell. Further, processing (4) is referred to as recognized cell identification. The control unit 203 stores the position of the identified recognized cell in the storage unit 202.

The method for identifying a recognized cell is not limited to the above-described one. For example, it is also possible to track the contour of white pixels inside a table region to detect a white pixel cluster, and identify the circumscribed rectangle of each white pixel cluster having a size equal to or larger than a predetermined size (minimum size of a presumed cell) as a recognized cell.

(5) The control unit 203 determines whether a black pixel cluster exists in each recognized cell. When the control unit 203 determines that a black pixel cluster exists in each recognized cell, the control unit 203 sets circumscribed rectangles to all of black pixel clusters existing in each recognized cell.

Further, when a plurality of circumscribed rectangles is set in one recognized cell, the control unit 203 determines whether a value of distance between the circumscribed rectangles is equal to or smaller than a third threshold value (for example, 20 pixels = 0.5 cm). More specifically, the control unit 203 selects circumscribed rectangles one by one, and detects a circumscribed rectangle of which the value of distance from the selected circumscribed rectangle is equal to or smaller than the third threshold value.

Further, when the control unit 203 detects two circumscribed rectangles of which the value of distance therebetween is equal to or smaller than a predetermined threshold value, the control unit 203 unifies the two detected circumscribed rectangles into one. More specifically, the control unit 203 sets a new circumscribed rectangle which circumscribes the two circumscribed rectangles and, instead, deletes the two original circumscribed rectangles before unification.

After setting a new circumscribed rectangle and deleting the two original circumscribed rectangles, the control unit 203 selects again circumscribed rectangles one by one from the beginning in the recognized cell, and unifies two circumscribed rectangles of which the value of distance therebetween is equal to or smaller than the third threshold value into one. More specifically, the control unit 203 repeats the processing for unifying circumscribed rectangles until there remain no circumscribed rectangles of which the value of distance therebetween is equal to or smaller than the third threshold value.

In the present exemplary embodiment, circumscribed rectangles of black pixel clusters existing in one recognized cell are unified into one, but circumscribed rectangles across different recognized cells are not unified.

Circumscribed rectangles set after the above-described processing (i.e., a circumscribed rectangle after the relevant unification processing) are referred to as text regions. The above-described processing is referred to as identification of text regions in a recognized cell. The control unit 203 associates the positions of text regions existing in each recognized cell with the relevant recognized cell, and stores the relevant positions in the storage unit 202.

Fig. 4 illustrates a result of region division performed on the scan image illustrated in Fig. 3. Referring to Fig. 4, the control unit 203 applies a four thick-line frame to the four sides of each identified recognized cell and applies a dotted line frame to the four sides of each text region. In the example illustrated in Fig. 4, thick-line frames 402, 403, 404, 406, and 407 indicate recognized cells. Dotted line frames 401 and 405 indicate text regions.

Referring to Fig. 4, ruled lines in the thick-line frame 403 are blurred, and therefore the thick-line frame 403 which is essentially formed of a plurality of cells is identified as one recognized cell. Further, although the thick-line frames 406 and 407 essentially form one cell, they are identified as separate recognized cells because of noise.

(6) The control unit 203 performs character recognition processing on each text region to acquire recognized characters corresponding to the relevant text region. The control unit 203 associates the recognized characters with corresponding text regions and then stores the recognized characters in the storage unit 202. Thus, recognized characters are also associated with each recognized cell which has been associated with text regions in advance. If the control unit 203 does not perform character recognition or if character recognition fails, there is no recognized character to be associated with a text region.

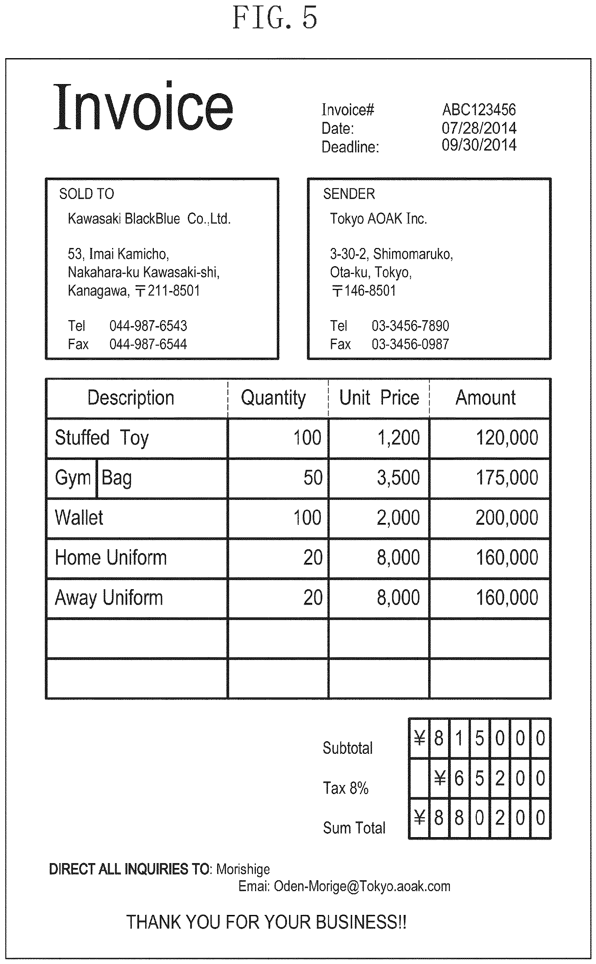

(7) The control unit 203 applies a thick-line frame to ruled lines (four sides) forming each recognized cell and then displays the scan image on the display unit 204. A displayed screen is illustrated in Fig. 5. Since each recognized cell is formed of four ruled lines, a thick-line frame is also formed of four lines. Although the frame lines may be neither thick lines nor solid lines and the frame color may not be black, the following descriptions will be made on the premise that frame lines are thick lines. The scan image displayed together with thick-line frames in processing (7) is a scan image before processing (1) to (6) is performed, i.e., a scan image before binarization.

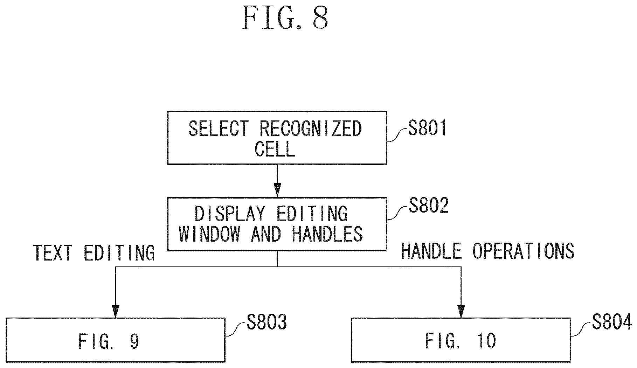

<Descriptions of flowchart in Fig. 8>

The user clicks an arbitrary position inside the image (for example, inside the image illustrated in Fig. 5) currently displayed on the display unit 204 via the receiving unit 205. In the present specification, a click refers to an action to press the left mouse button and then release the button immediately (within a predetermined period of time). In step S801, when the clicked position is inside a region surrounded by four thick lines (i.e., inside a recognized cell), the control unit 203 determines that the relevant recognized cell is selected. The following descriptions will be made on the premise that a recognized cell 602 is selected. A mouse pointer 601 indicates a position pointed by the user via the receiving unit 205.

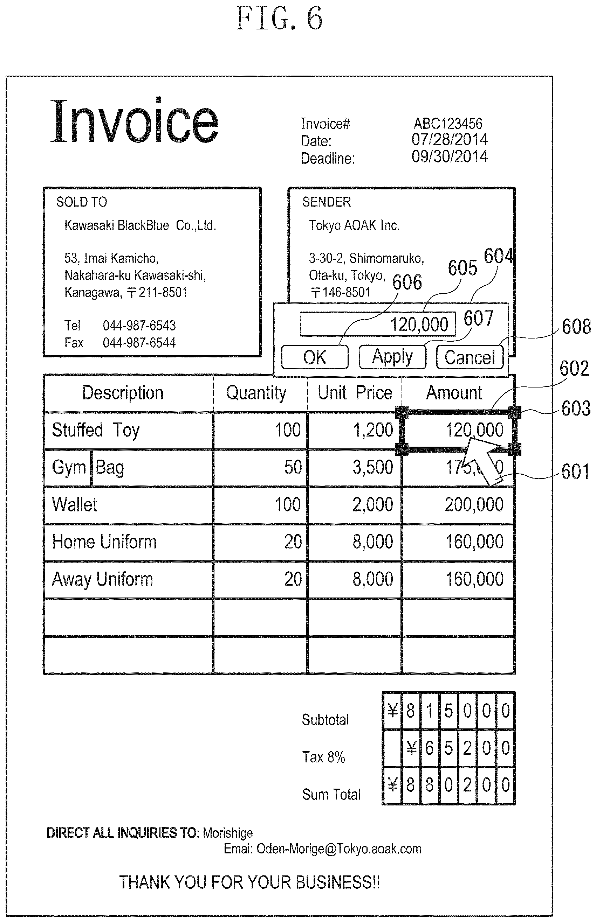

In step S802, when the above-described determination is made, the control unit 203 additionally displays on the display unit 204 an editing window (editing region) 604 for editing original characters inside the selected recognized cell and handles 603 for changing the position and size of the selected recognized cell 602. The handles 603 (referred to as recognized cell position change handles) are additionally displayed at the four corners of the thick-line frame of the selected recognized cell 602. Fig. 6 illustrates a state where the recognized cell position change handles 603 and the editing window 604 are additionally displayed.

As illustrated in Fig. 6, in step S802, it is also desirable to make an arrangement so that the selected recognized cell (a recognized cell in the selection state) is distinguishable from other ones. For example, it is also desirable to use a thicker line frame (or extra thick-line frame) for the selected recognized cell. Obviously, other methods are applicable as long as the selected recognized cell is distinguishable from other ones. For example, a method for using other colors or using dotted lines for the frame of the selected recognized cell is also considered. In the present specification, descriptions will be continued based on a case where a method for using a extra thick-line frame is applied as a method for distinguishing the selected recognized cell from other ones.

When the selection state of the recognized cell is canceled, such a extra thick-line frame state returns to the former state (i.e., returns to the thick-line frame state similar to other recognized cells).

A text entry box 605 in the editing window 604 displays the recognized characters associated with the selected recognized cell, in the editing window text size. The user is able to delete the recognized characters from the text entry box 605 and, instead, input other characters. Thus, the recognized characters can be edited.

If there is no recognized character associated with the selected recognized cell (e.g., if no text region is detected from inside the selected recognized cell, or if a text region is detected and character recognition fails resulting in no recognized character), the text entry box 605 is empty.

An OK button 606 is clicked to confirm the contents of text editing. An Apply button 607 is clicked to display the post-edit text on the scan image. A Cancel button 608 is clicked to cancel the contents of text editing.

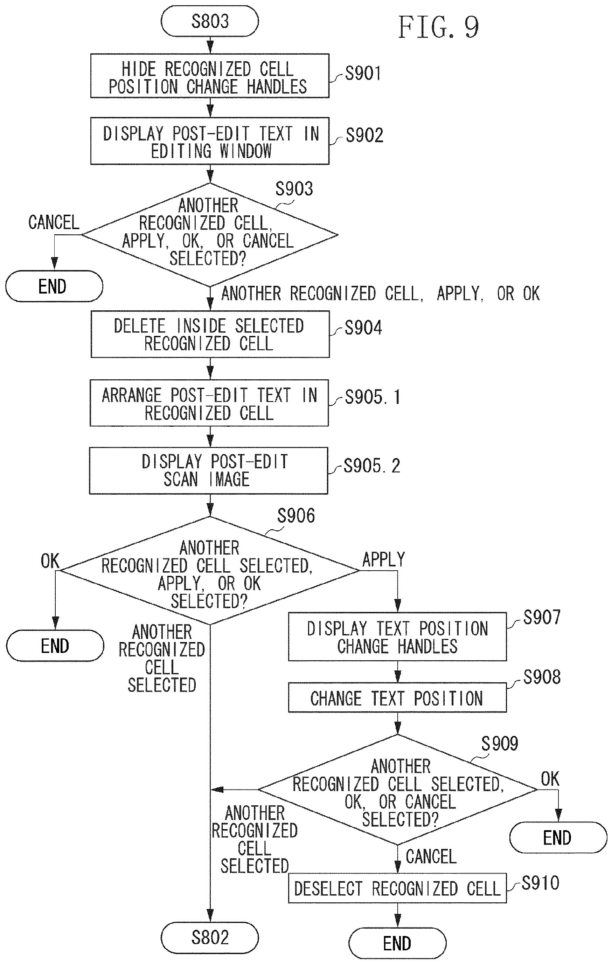

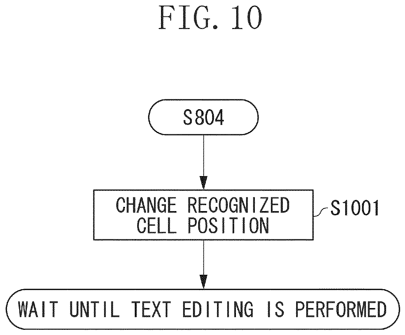

After the screen illustrated in Fig. 6 is displayed, the user performs a new operation on the receiving unit 205. If the operation is text editing on the editing window 604, the processing proceeds to step S803 (i.e., step S901 illustrated in Fig. 9). If the operation performed by the user on the receiving unit 205 is an operation of a recognized cell position change handle, the processing proceeds to step S804 (i.e., step S1001 illustrated in Fig. 10).

<Descriptions of flowchart in Fig. 9>

In step S901, the control unit 203 hides the recognized cell position change handles 603.

In step S902, the control unit 203 displays on the editing window 604 the characters edited thereon in the editing window text size.

In step S903, the control unit 203 determines whether the operation performed by the user on the receiving unit 205 after text editing is a selection of another recognized cell, a click of the Apply button, a click of the OK button, or a click of the Cancel button. When the control unit 203 determines that the operation is a click of the Cancel button (Cancel in step S903), the control unit 203 cancels the selection state of the selected recognized cell. Then, the processing exits the flowchart illustrated in Fig. 9. Although descriptions will be omitted, the recognized cell the selection state of which is canceled returns from the extra thick-line frame state to the thick-line frame state similar to other recognized cell as described above.

When the control unit 203 determines that the operation is not a click of the Cancel button (Another Recognized Cell Selected, Apply, or OK in step S903), then in step S904, the control unit 203 deletes all colors of the inside the selected recognized cell (i.e., inside the recognized cell in the scan image). More specifically, the inside of the recognized cell is filled in white. Although, in the example described below, the color of the inside the recognized cell is replaced with white color assuming that the cell color is white, the relevant color may be replaced with the background color if the background color of the cell is another color.

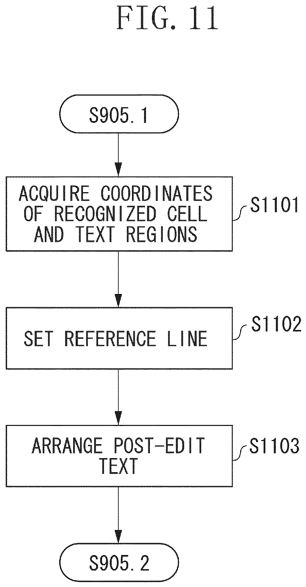

Thereafter, in step S905.1, the control unit 203 arranges the post-edit text in the scan image text size inside the recognized cell. Details will be described below with reference to Fig. 11. In step S905.2, the control unit 203 stores the post-edit scan image (i.e., an image after deleting inside the recognized cell and arranging the post-edit text) in the storage unit 202 and replaces the scan image displayed on the display unit 204 with the post-edit scan image. Thus, the post-edit scan image is displayed with a thick-line frame applied to the four sides of each recognized cell. Further, the four sides of the currently selected recognized cell remain displayed in the extra thick-line frame state.

Further, when the above-described operation is a click of the OK button (OK in step S906), the control unit 203 cancels the selection state of the selected recognized cell. Then, the processing exits the flowchart illustrated in Fig. 9. When the above-described operation is a selection of another recognized cell (Another Recognized Cell Selected in step S906), the control unit 203 cancels the selection state of the selected recognized cell. Then, the processing proceeds to step S802. When the above-described operation is a click of the Apply button 607 (Apply in step S906), then in step S907, the control unit 203 displays the text position change handles at the four corners of the circumscribed rectangle of the post-edit text arranged in step S905.1.

If the user wants to change the position of the post-edit text, the user performs an operation for moving the position of a text position change handle on the receiving unit 205. Then, the control unit 203 performs a text position change operation according to the relevant operation, and further replaces the post-edit scan image stored in the storage unit 202 with the image after the text position change operation. The control unit 203 also replaces the currently displayed post-edit scan image with the image after the text position change operation. In step S908, the image after the text position change operation is stored and displayed as the post-edit scan image. On the other hand, when it is not necessary to change the text position, no operation is performed on the text position change handles. In this case, the processing in step S908 is skipped.

Subsequently, the user selects another recognized cell, clicks the OK button, or clicks the Cancel button. When the receiving unit 205 receives a selection of another recognized cell (Another Recognized Cell Selected in step S909), the control unit 203 cancels the selection state of the selected recognized cell. Then, the processing proceeds to step S802. When the receiving unit 205 receives a click of the OK button (OK in step S909), the control unit 203 cancels the selection state of the selected recognized cell. Then, the processing exits the flowchart illustrated in Fig. 9. When the receiving unit 205 receives a click of the Cancel button (Cancel in step S909), then in step S910, the control unit 203 returns the inside of the selected recognized cell to the former state. More specifically, the control unit 203 returns the recognized cell to the state before the deletion processing in step S904. Then, the control unit 203 cancels the selection state of the selected recognized cell. Then, the processing exits the flowchart illustrated in Fig. 9.

After completing the processing illustrated in Fig. 9, the control unit 203 waits until the user selects another recognized cell. When the user instructs the receiving unit 205 to transmit the post-edit scan image to another apparatus, the control unit 203 cancels the selection waiting state. Then, the control unit 203 instructs the transmitting and receiving unit 201 to transmit the post-edit scan image stored in the storage unit 202 to the other apparatus. Assuming that the other apparatus is the copying machine 100, the copying machine 100 receives the post-edit scan image via the transmitting and receiving unit 102 and, depending on an instruction from the user, prints the post-edit scan image via the printer 103.

Upon completion of the above-described processing, the post-edit scan image to be transmitted to another apparatus is an image having been subjected to the deletion of the inside of the (selected) recognized cell and the arrangement of the post-edit text. However, the image to be transmitted is not necessarily limited thereto. For example, a file including the original scan image (the scan image before binarization), an instruction for deleting the inside the recognized cell, and an instruction for arranging the post-edit text, may be transmitted. When another apparatus receives such a file, the other apparatus deletes the inside the recognized cell and arranges the post-edit text based on the original scan image.

<Descriptions of flowchart in Fig. 10>

As described above, when the operation performed by the user on the receiving unit 205 is an operation for the recognized cell position change handles 603, the processing proceeds to step S804 (i.e., step S1001 illustrated in Fig. 10).

In step S1001, the control unit 203 changes the position of the recognized cell according to the relevant operation, changes the four sides of the recognized cell at the position after change to the extra thick-line frame state, and displays the recognized cell on the display unit 204. In this case, the extra thick-line frame state of the four sides of the recognized cell at the position before change is canceled, and the cell returns to the normal state (a state where neither the thick-line frame nor the extra thick-line frame is applied). Likewise, the recognized cell position change handles 603 are canceled from the corners of the recognized cell at the position before change, and displayed at the corners of the recognized cell at the position after change.

Subsequently, the control unit 203 waits until text editing is performed via the editing window 604. When text editing is performed, the processing proceeds to step S901.

If the position of the recognized cell is made changeable in this way before performing text editing, the position of the recognized cell the inside of which is to be deleted in step S904 can be changed. Thus, the portion which should be deleted is deleted and the portion which should not be deleted is not deleted.

<Descriptions of flowchart in Fig. 11>

The processing in step S905.1 will be described in detail below with reference to Fig. 11.

In step S1101, the control unit 203 acquires the position of the selected recognized cell and the positions of text regions associated with the relevant recognized cell from the storage unit 202.

In step S1102, the control unit 203 sets a reference line.

It is assumed that a recognized cell has upper left corner coordinates $(X1, Y1)$ and lower right corner coordinates $(X2, Y2)$, and a text region has upper left corner coordinates $(x1, y1)$ and lower right corner coordinates $(x2, y2)$.

To set a reference line, the control unit 203 calculates the right and left margins of the text region in the selected recognized cell. In this case, the left margin is $(x1 - X1)$, and the right margin is $(X2 - x2)$. When (Left margin) $\geq$ (Right margin), the control unit 203 sets the reference line to the right side (right frame) of the text region, i.e., a straight line connecting the corners $(x2, y1)$ and $(x2, y2)$. When (Left margin) < (Right margin), the control unit 203 sets the reference line to the left side (left frame) of the text region, i.e., a straight line connecting the corners $(x1, y1)$ and $(x1, y2)$.

In step S1103, the control unit 203 arranges the post-edit text according to the reference line set inside the selected recognized cell. More specifically, when the reference line is set to the left side of the text region, the post-edit text is arranged left-justified setting the reference line as a starting point. On the other hand, when the reference line is set to the right side of the text region, the post-edit text is arranged right-justified setting the reference line as a starting point.

Although, in this case, the default size of the scan image text is used as the size of the text to be arranged, a text size determined in the following way may also be used. For example, when the width of the original characters existing in the selected recognized cell is 100 dots per 4 characters, the text size is estimated to be 25 dots per character. To naturally arrange the post-edit text in the recognized cell, it is desirable that the text size of the post-edit text is also approximately 25 dots per character. This enables calculating the number of points leading to a standard text size of 25 dots, and using the number of points as the size of the text to be arranged. Further, the text size determined in this way may be manually changed by the user. Further, the color, font, and style (standard, italic, or bold) of the text to be arranged may be manually changed by the user.

It is assumed that the circumscribed rectangle of the post-edit text is H in height and W in width, that the text region has upper left corner coordinates $(x1, y1)$ and lower right corner coordinates $(x2, y2)$, and that the reference line acquired in step S1102 is set to the right side of the text region.

In Windows (registered trademark), the x-coordinate increases toward the right direction and the y-coordinate increases toward the downward direction. Therefore, in the above-described case, the circumscribed rectangle of the post-edit text has upper left corner coordinates $(x2 - W, y2 - H)$ and lower right corner coordinates $(x2, y2)$.

When the reference line is set to the left side, the left side of the circumscribed rectangle of the post-edit text is aligned with the reference line (the left side of the text region). Therefore, the circumscribed rectangle of the post-edit text has upper left corner coordinates $(x1, y2 - H)$ and lower right corner coordinates $(x1 + W, y2)$.

In the above-described examples, the position of the post-edit text in the height direction (Y direction) is based on the position of the lower side of the text region where the original characters were arranged. However, instead of this position, the position of the post-edit text may be determined so as to cause the vertical center of the post-edit text to coincide with the vertical center of the text region where the original characters were arranged.

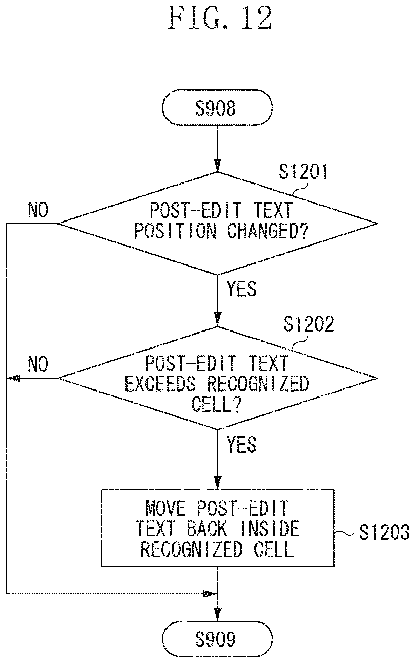

In step S908 in the first exemplary embodiment, in a case where the recognized cell is small or if the display magnification is small because a tablet type PC is used, moving the post-edit text is difficult, and therefore the text may not suitably fit into the recognized cell. Fig. 12 illustrates a method for easily moving the post-edit text even in such a case.

<Descriptions of flowchart in Fig. 12>

In step S1201, the control unit 203 determines whether the position of the post-edit text has been changed. When the position has been changed (YES in step S1201), the processing proceeds to step S1202. On the other hand, when the position has not been changed (NO in step S1201), the processing proceeds to step S909.

In step S1202, the control unit 203 determines whether the position of the post-edit text exceeds the boundary of the recognized cell. In other words, the control unit 203 determines whether the post-edit text protrudes from the recognized cell. When the post-edit text exceeds the boundary (YES in step S1202), the processing proceeds to step S1203. On the other hand, when the post-edit text does not exceeds the boundary (NO in step S1202), the processing proceeds to step S909.

It is assumed that the recognized cell has upper left corner coordinates (X1, Y1) and lower right corner coordinates (X2, Y2), and the post-edit text after movement has upper left corner coordinates (x1, y1) and lower right corner coordinates (x2, y2).

In any one of the following cases, the control unit 203 determines that the position of the post-edit text exceeds the boundary of the recognized cell.

<1> When the post-edit position exceeds the boundary on the right side (x2 > X2)
<2> When the post-edit position exceeds the boundary on the left side (X1 > x1)
<3> When the post-edit position exceeds the boundary on the lower side (y2 > Y2)
<4> When the post-edit position exceeds the boundary on the upper side (Y1 > y1)

In step S1203, the control unit 203 restores the post-edit text inside the recognized cell. In the present exemplary embodiment, the post-edit text is moved back inside the recognized cell by a predetermined distance T.

After the post-edit text has been moved back inside the recognized cell by the distance T in cases <1> to <4>, the coordinates of the post-edit text are as follows.

When the post-edit position exceeds the boundary on the right side, the post-edit text has lower right corner coordinates (X2 - T, y2). In this case, the post-edit text is moved to the left by (x2 - (X2 - T)). Therefore, the post-edit text has upper left corner coordinates (x1 - (x2 - (X2 - T)), y1).

When the post-edit position exceeds the boundary on the left side, the post-edit text has upper left corner coordinates (X1 + T, y1). In this case, the post-edit text is moved to the right by (X1 + T - x1). Therefore, the post-edit text has lower right corner coordinates (x2 + (X1 + T - x1), y2).

When the post-edit position exceeds the boundary on the lower side, the post-edit text has lower right corner coordinates (x2, Y2 - T). In this case, the post-edit text is moved upward by (y2 - (Y2 - T)). Therefore, the post-edit text has upper left corner coordinates (x1, y1 - (y2 - (Y2 - T))).

When the post-edit position exceeds the boundary on the upper side, the post-edit text has upper left corner coordinates (x1, Y1 + T). In this case, the post-edit text is moved downward by (Y1 + T - y1). Therefore, the post-edit text has lower right corner coordinates (x2, y2 + (Y1 + T - y1)).

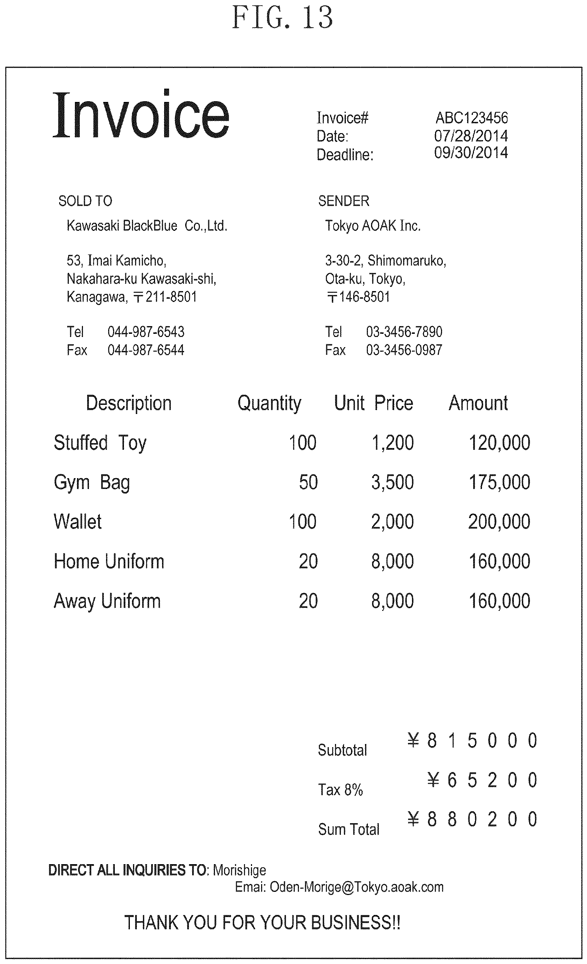

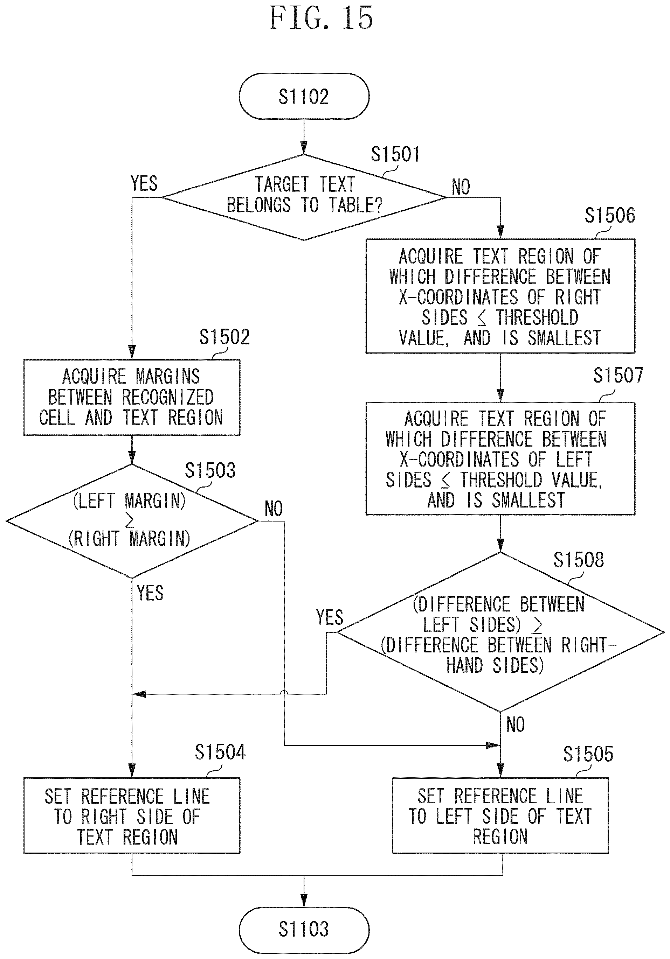

A third exemplary embodiment will be described below. In step S1102 in the first exemplary embodiment, in a table having no ruled lines as in the example illustrated in Fig. 13, the recognized cell cannot be determined based on ruled line positions, and therefore margins between the recognized cell and a text region cannot be calculated. Processing performed by the control unit 203 to easily set a reference line even in such a case will be described below with reference to the flowchart illustrated in Fig. 15.

<Descriptions of flowchart in Fig. 15>

In step S1501, the control unit 203 determines whether the editing target text belongs to a table. The text in the recognized cell 602 illustrated in Fig. 6 belongs to a table. A table having no ruled lines as illustrated in Fig. 13 cannot be recognized as a table. Therefore, the control unit 203 determines that the text does not belong to a table.

When the editing target text belongs to a table (YES in step S1501), the processing proceeds to step S1502. On the other hand, when the editing target text does not belong to a table (NO in step S1501), the processing proceeds to step S1506. The description when the editing target text belongs to a table is similar to that in the first exemplary embodiment. In step S1502, the control unit 203 acquires margins between the recognized cell and a text region.

In step S1503, the control unit 203 compares the width of the left margin with the width of the right margin to determine whether the left margin is equal to or greater than the right margin, i.e., whether a condition "(Left margin) ≥ (Right margin)" is satisfied. When the condition "(Left margin) ≥ (Right margin)" is satisfied (YES in step S1503), the processing proceeds to step S1504. On the other hand, when the relevant condition is not satisfied (NO in step S1503), the processing proceeds to step S1505.

In step S1504, the control unit 203 sets the reference line to the right side of the text region of the editing target text. In step S1505, the control unit 203 sets the reference line to the left side of the text region of the editing target text.

This completes the processing for setting the reference line in step S1102. Then, the processing proceeds to step S1103.

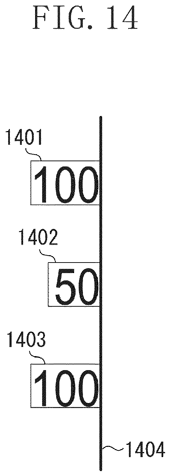

Processing performed by the control unit 203 according to the third exemplary embodiment in a case where the editing target text is determined not to belong to a table in step S1501, will be described. In step S1506, the control unit 203 checks all of text regions, and acquires the text region of which the difference between the X-coordinate of the right side of the editing target text region and the X-coordinate of the right side of each text region located upper and lower side thereof is a threshold value or below, and the smallest. Fig. 14 illustrates an editing target text region 1402 and text regions 1401 and 1403 respectively existing on the upper and lower sides of the editing target text region 1402. In step S1506, the difference between the X-coordinate of the right side of the text region 1402 and the X-coordinate of the right side of each of the text regions 1401 and 1403 is 0. Therefore, each of the text regions 1401 and 1403 is determined as a text region of which difference between the X-coordinate of the right side and the X-coordinate of the right side of the text region 1402 is a threshold value (for example, 10 pixels) or below, and the difference thereof is the smallest.

In step S1507, the control unit 203 compares the X-coordinate of the left side of the editing target text region with the X-coordinate of the left side of each of the upper and lower text regions, and acquires the text region of which the difference therebetween is a threshold value or below, and the smallest. In the example illustrated in Fig. 14, the difference between the X-coordinate of the left side of the editing target text region 1402 and the X-coordinate of the left side of each of the text regions 1401 and 1403 is larger than the threshold value (10 pixels), and therefore no text region is acquired.

In step S1508, the control unit 203 compares the difference between the X-coordinates of the right sides of the upper or the lower text region and the editing target text region acquired in step S1506 with the difference between the X-coordinates of the left sides of the relevant text regions acquired in step S1507. More specifically, the control unit 203 determines whether the difference between the X-coordinates of the left sides is equal to or greater than the difference between the X-coordinates of the right sides, i.e., whether a condition "(Difference between left sides) ≥ (Difference between right sides)" is satisfied.

When the condition "(Difference between left sides) ≥ (Difference between right sides)" is satisfied (YES in step S1508), then the processing proceeds to step S1504. In step S1504, the control unit 203 sets the reference line to the right side of the editing target text region 1402. On the other hand, when the condition is not satisfied (NO instep S1508), then the processing proceeds to step S1505. In step S1505, the control unit 203 sets the reference line to the left side of the editing target text region 1402.

In the example illustrated in Fig. 14, text regions satisfying the condition can be acquired in step S1506, and such text regions cannot be acquired in step S1507. If no text region is acquired, the control unit 203 determines that the condition "(Difference between left sides) ≥ (Difference between right sides)" is satisfied on the assumption that the difference is infinite. In this case, "Infinite ≥ 0" is true and therefore the condition is satisfied. Then, the processing proceeds to step S1504. In step S1504, the control unit 203 determines to set the reference line to the right side of the text region. A line segment 1404 illustrated in Fig. 14 explicitly indicates that the reference line is set to the right side of the text region 1402.

This completes the processing for setting a reference line in step S1102. Then, the processing proceeds to step S1103.

In this way, even for a table having no ruled line as illustrated in Fig. 13, it is possible to set reference lines, correctly edit characters, and update the image.

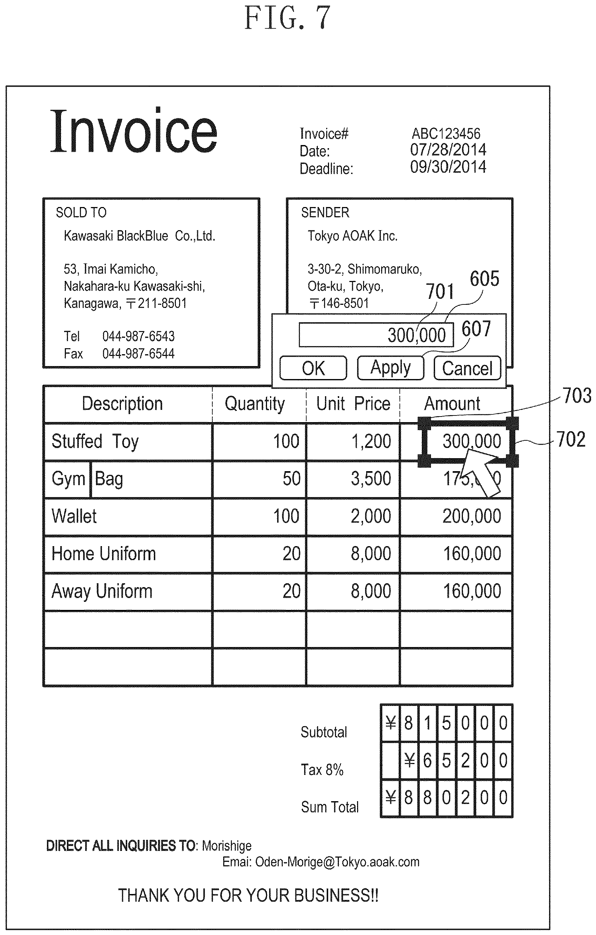

In step S1103 in the first exemplary embodiment, the post-edit text is arranged. The text size of the post-edit text is preset by the user. Alternatively, the control unit 203 sets the text size of the post-edit text through an estimation based on the original character image. An example of a size estimation method has been described in the first exemplary embodiment. However, since the preset size and the size acquired through an estimation are not necessarily correct, changing the text size is sometimes required. Processing performed by the control unit 203 to easily change the text size even in such a case will be described below with reference to Fig. 7.

Fig. 7 illustrates an arrangement of the post-edit text. A numerical value 701 is input in the text entry box 605 illustrated in Fig. 7 with respect to the recognized cell 602 illustrated in Fig. 6. In this example, the former numerical value is 120,000 and a replacing numerical value 701 is 300,000.

When the user inputs a numerical value in the text entry box 605 and then presses the Apply button 607, in step S1103, the control unit 203 generates a replacing text 702 using a preset size or an estimated size for the replacing numerical value 701. Then, the control unit 203 arranges the replacing text 702 based on the reference line acquired in step S1102.

After arrangement, in step S907, the control unit 203 displays text position change handles 703. Although, in the first exemplary embodiment, the processing for changing the text position in step S908 has been described, a method for changing the text size of the replacing text 702 will be described below.

Dragging one of the text position change handles 703 to enlarge the text region 1402 is referred to as text size enlargement, and dragging one of the text position change handles 703 to reduce the text region 1402 is referred to as text size reduction. A method for acquiring the text size will be described below. The text region before change is assumed to be HI in height and W1 in width. The text region after change is assumed to be H2 in height and W2 in width.

Height and width change magnifications are calculated as follows.

$$\text{(Height change magnification)} = H2/H1$$

$$\text{(Width change magnification)} = W2/W1$$

Assuming that the height or the width change magnification whichever smaller is the final change magnification, the text size after change is calculated as follows.

$$\text{(Text size after change)} = \text{(Text size before change)} \times$$

$$\text{(Final change magnification)}.$$

The smaller change magnification is set as the final change magnification because, if the larger change magnification is set as the final change magnification, the text does not fit into the height or width of the text region.

The text size of the post-edit text can easily be changed in this way.

When the text size has been changed, the control unit 203 regenerates the replacing text 702 according to the changed text size, and then displays the replacing text 702 based on the reference line acquired in step S1102.

A fifth exemplary embodiment will be described below. In the fourth exemplary embodiment, a method for changing the text size of the post-edit text performed by the control unit 203 in step S1103 has been described. However, in the case of a small display area such as a display screen of a tablet PC, it may be difficult to change the text size by using the text position change handles 703. In the present exemplary embodiment, an example of a method for changing the text size used in such a case will be described below. Instead of handle operations, click and tap operations are used in the present exemplary embodiment.

Double-clicking the inside of the text region 1402 enlarges the text size in one step. When the text exceeds the recognized cell region, double-clicking the inside thereof reduces the text size in one step. When the text size is further reduced and becomes a predetermined text size or below, the text size returns to the former one.

One step in text size may mean units of 1 point or units of 2 points. For example, when the former text size is 12 points, the minimum size is 8 point, and the 1-step change size is 2 points, the text size changes in the following order each time double-clicking is made: 12, 14, 16, 18 (recognized cell region exceeded), 16, 14, 12, 10, 8 (minimum setting value), and 12 (original value).

The method for changing the text size may be in such a way that a single-click (tap) enlarges the text size in one step and a double-click reduces the text size in one step. The method may also be in such a way that a left-click enlarges the text size and a right-click reduces the text size. These methods enable easily changing the text size of the post-edit text even in the case of a small display screen.

Other Embodiments

Embodiments of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiments and/or that includes one or more circuits (e.g., application specific integrated circuit (ASIC)) for performing the functions of one or more of the above-described embodiments, and by a method performed by the computer of the system or apparatus by, for example, reading out and executing the computer executable instructions from the storage medium to perform the functions of one or more of the above-described embodiments and/or controlling the one or more circuits to perform the functions of one or more of the above-described embodiments. The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments, but is limited by the appended claims.

**Claims**

1.  An information processing apparatus comprising:

    a display unit (204);
    an image receiving means (201) configured to receive a scan image generated by scanning a document with a scanner (101);
    a first control means (203) configured to identify a plurality of recognized cells by analyzing the scan image, wherein the recognized cells are regions surrounded by ruled lines forming a table region included in the scan image and/or circumscribed rectangles of white pixel clusters detected from a table region included in the scan image; and
    a second control means (203) configured to obtain recognized characters by performing an optical character recognition processing on character images included in the recognized cells;
    **characterized in that** the apparatus further comprises:

    a third control means (203) configured to control the display unit to display the scan image with ruled lines surrounding the plurality of recognized cells;
    a receiving means (205) configured to receive a position that is designated by a user on the displayed scan image;
    a determining means (203) configured to determine, if the designated position is within one of the plurality of recognized cells, that the one recognized cell corresponding to the designated position is selected from the plurality of recognized cells; and
    a fourth control means (203) configured to control the display unit to display, if the determining means determines that the one recognized cell is selected, both an editing region (604) for allowing the user to edit the recognized characters (605) of character images corresponding to the selected one recognized cell and handles (603) for changing the position and size of the selected one recognized cell; and
    a fifth control means (203) configured to replace, if the displayed recognized characters are edited to another text on the displayed editing region, the character images corresponding to the selected one recognized cell in the scan image with the edited another text.

2.  The information processing apparatus according to claim 1, further comprising a sixth control means (203) configured to change, in the case that the displayed handles are operated by a user, the position and size of the one of the recognized cells based on positions of the operated handles.

3.  The information processing apparatus according to claim 1, wherein, in the case that another recognized cell is selected after the displayed recognized characters are edited to another text on the displayed editing region, the fifth control means replaces character images corresponding to the selected one recognized cell with the edited another text and further displays new handles for changing the position and size of the selected another recognized cell.

4.  The information processing apparatus according to claim 1, in the case that the displayed recognized characters are edited to another text on the displayed editing region, the fifth control means replaces the character images corresponding to the one recognized cell in the scan image with the edited another text by deleting the character images corresponding to the selected one recognized cell in the scan image and arranging the edited another text at a position of the character images corresponding to the selected one recognized cell in the scan image.

5.  The information processing apparatus according to claim 4, wherein, in a case where the positions of the character images are leftward in the selected one recognized cell, the fifth control means replaces the character images corresponding to the selected one recognized cell in the scan image with the edited another text by deleting the character images corresponding to the selected one recognized cell in the scan image and arranging the another text at a leftward position corresponding to the deleted character images corresponding to the selected one recognized cell in the scan image, and

wherein, in a case where the positions of the character images are rightward in the selected one recognized cell, the fifth control means replaces the character images corresponding to the selected one recognized cell in the scan image with the edited another text by deleting the character images corresponding to the selected one recognized cell in the scan image and arranging the another text at a rightward position corresponding to the deleted character images corresponding to the selected one recognized cell in the scan image.

6. An information processing method comprising:

receiving a scan image generated by scanning a document with a scanner (101);
identifying a plurality of recognized cells by analyzing the scan image, wherein the recognized cells are regions surrounded by ruled lines forming a table region included in the scan image and/or circumscribed rectangles of white pixel clusters detected from a table region included in the scan image; and
obtaining recognized characters by performing an optical character recognition processing on character images included in the recognized cells;
**characterized in that** the method further comprises:

displaying on a display unit the scan image with ruled lines surrounding the plurality of recognized cells;
receiving a position that is designated by a user on the displayed scan image,
selecting, from the plurality of recognized cells, one recognized cell corresponding to the designated position;
displaying on the display unit, in the case that the one recognized cell is selected, both an editing region (604) for allowing the user to edit the recognized characters (605) of character images corresponding to the selected one recognized cell and handles (603) for changing the position and size of the selected one recognized cell; and
replacing, in the case that the displayed recognized characters are edited to another text on the displayed editing region, the character images corresponding to the selected one recognized cell in the scan image with the edited another text.

7. The information processing method according to claim 6, further comprising a step of changing, in the case that the displayed handles are operated by a user, the position and size of the one of the recognized cells based on positions of the operated handles.

8. The information processing method according to claim 6, wherein, in the case that another recognized cell is selected after the displayed recognized characters are edited to another text on the displayed editing region, the character images corresponding to the selected one recognized cell are replaced with the edited another text, and new handles for changing the position and size of the selected another recognized cell are displayed.

9. The information processing method according to claim 6, wherein, in the case that the displayed recognized characters are edited to another text on the displayed editing region, the character images corresponding to the selected one recognized cell in the scan image are replaced with the edited another text by deleting the character images corresponding to the selected one recognized cell in the scan image and arranging the edited another text at a position of the character images corresponding to the selected one recognized cell in the scan image.

10. The information processing method according to claim 9, wherein, in a case where the positions of the character images are leftward in the selected one recognized cell, the character images corresponding to the selected one recognized cell in the scan image is replaced with the edited another text by deleting the character images corresponding to the selected one recognized cell in the scan image and arranging the another text at a leftward position corresponding to the deleted character images corresponding to the selected one recognized cell in the scan image, and

wherein, in a case where the positions of the character images are rightward in the selected one recognized cell, the character images corresponding to the selected one recognized cell int he scan image is replaced with the edited another text by deleting the character images corresponding to the selected one recognized cell in the scan image and arranging the another text at a rightward position corresponding to the deleted character images corresponding to the selected one recognized cell in the scan image.

11. A computer program comprising instructions which, when executed on a computer cause that computer to perform the method of any one of claims 6 to 10.

**12.** A computer-readable storage medium having stored thereon the program of claim 11.

**Patentansprüche**

**1.** Informationsverarbeitungsvorrichtung, umfassend:

eine Anzeigeeinheit (204);
eine Bildempfangseinrichtung (201), die konfiguriert ist, ein durch Scannen eines Dokuments mit einem Scanner (101) erzeugtes Scanbild zu empfangen;
eine erste Steuereinrichtung (203), die konfiguriert ist, mehrere erkannte Zellen durch Analysieren des Scanbildes zu identifizieren, wobei die erkannten Zellen Gebiete sind, die von ein Tabellengebiet bildenden Gitterlinien im Scanbild umgeben sind und/oder aus einem Tabellengebiet im Scanbild detektierte umbeschriebene Rechtecke aus Anhäufungen weißer Pixel sind; und
eine zweite Steuereinrichtung (203), die konfiguriert ist, durch Durchführen einer Verarbeitung zur optischen Zeichenerkennung an Zeichenbildern in den erkannten Zellen erkannte Zeichen zu erhalten;
**dadurch gekennzeichnet, dass** die Vorrichtung ferner umfasst:

eine dritte Steuereinrichtung (203), die konfiguriert ist, die Anzeigeeinheit dahingehend zu steuern, das Scanbild mit die mehreren erkannten Zellen umgebenden Gitterlinien anzuzeigen;
eine Empfangseinrichtung (205), die konfiguriert ist, eine durch einen Benutzer auf dem angezeigten Scanbild bestimmte Position zu empfangen;
eine Bestimmungseinrichtung (203), die konfiguriert ist, falls sich die bestimmte Position innerhalb einer der mehreren erkannten Zellen befindet, zu bestimmen, dass die eine der bestimmten Position entsprechende erkannte Zelle unter den mehreren erkannten Zellen ausgewählt wird; und
eine vierte Steuereinrichtung (203), die konfiguriert ist, die Anzeigeeinheit dahingehend zu steuern, sowohl ein Editiergebiet (604) anzuzeigen, um es dem Benutzer zu ermöglichen, die erkannten Zeichen (605) von der ausgewählten einen erkannten Zelle entsprechenden Zeichenbildern zu editieren, als auch Bedienelemente (603) zum Ändern der Position und Größe der ausgewählten einen erkannten Zelle anzuzeigen, falls die Bestimmungseinrichtung bestimmt, dass die eine erkannte Zelle ausgewählt ist; und
eine fünfte Steuereinrichtung (203), die konfiguriert ist, falls die angezeigten erkannten Zeichen im angezeigten Editiergebiet in einen anderen Text editiert werden, die der ausgewählten einen erkannten Zelle im Scanbild entsprechenden Zeichenbilder mit dem editierten anderen Text zu ersetzen.

**2.** Informationsverarbeitungsvorrichtung nach Anspruch 1, ferner umfassend eine sechste Steuereinrichtung (203), die konfiguriert ist, die Position und Größe der einen der erkannten Zellen basierend auf Positionen der betätigten Bedienelemente zu ändern, falls die angezeigten Bedienelemente von einem Benutzer betätigt werden.

**3.** Informationsverarbeitungsvorrichtung nach Anspruch 1, wobei, falls eine andere erkannte Zelle ausgewählt wird, nachdem die angezeigten erkannten Zeichen in einen anderen Text im angezeigten Editiergebiet editiert werden, die fünfte Steuereinrichtung der ausgewählten einen erkannten Zelle entsprechende Zeichenbilder mit dem editierten anderen Text ersetzt und ferner neue Bedienelemente zum Ändern der Position und Größe der ausgewählten anderen erkannten Zelle anzeigt.

**4.** Informationsverarbeitungsvorrichtung nach Anspruch 1, wobei, falls die angezeigten erkannten Zeichen in einen anderen Text im angezeigten Editiergebiet editiert werden, die fünfte Steuereinrichtung die der einen erkannten Zelle im Scanbild entsprechenden Zeichenbilder mit dem editierten anderen Text ersetzt, und zwar durch Löschen der der ausgewählten einen erkannten Zelle im Scanbild entsprechenden Zeichenbilder und Anordnen des editierten anderen Textes an einer Position der der ausgewählten einen erkannten Zelle im Scanbild entsprechenden Zeichenbilder.

**5.** Informationsverarbeitungsvorrichtung nach Anspruch 4, wobei, falls sich die Positionen der Zeichenbilder links in der ausgewählten einen erkannten Zelle befinden, die fünfte Steuereinrichtung die der ausgewählten einen erkannten Zelle im Scanbild entsprechenden Zeichenbilder mit dem editierten anderen Text ersetzt, und zwar durch Löschen der der ausgewählten einen erkannten Zelle im Scanbild entsprechenden Zeichenbilder und Anordnen des anderen Textes an einer den der ausgewählten einen erkannten Zelle im Scanbild entsprechenden gelöschten Zeichenbildern entsprechenden linken Position, und
wobei, falls sich die Positionen der Zeichenbilder rechts in der ausgewählten einen erkannten Zelle befinden, die fünfte Steuereinrichtung die der ausgewählten einen erkannten Zelle im Scanbild entsprechenden Zeichenbilder mit dem editierten anderen Text ersetzt, und zwar durch Löschen der der ausgewählten einen erkannten Zelle im Scanbild entsprechenden Zeichenbilder und Anordnen des anderen Textes an einer den der ausgewählten einen erkannten Zelle im Scanbild entsprechenden gelöschten Zeichenbildern entsprechenden rechten Position.

6. Informationsverarbeitungsverfahren, umfassend:

Empfangen eines durch Scannen eines Dokuments mit einem Scanner (101) erzeugten Scanbildes;
Identifizieren mehrerer erkannter Zellen durch Analysieren des Scanbildes, wobei die erkannten Zellen Gebiete sind, die von ein Tabellengebiet bildenden Gitterlinien im Scanbild umgeben sind und/oder aus einem Tabellengebiet im Scanbild detektierte umbeschriebene Rechtecke aus Anhäufungen weißer Pixel sind; und
Erhalten erkannter Zeichen durch Durchführen einer Verarbeitung zur optischen Zeichenerkennung an Zeichenbildern in den erkannten Zellen;
**dadurch gekennzeichnet, dass** das Verfahren ferner umfasst:

Anzeigen des Scanbildes mit die mehreren erkannten Zellen umgebenden Gitterlinien auf einer Anzeigeeinheit;
Empfangen einer durch einen Benutzer auf dem angezeigten Scanbild bestimmten Position,
Auswählen einer der bestimmten Position entsprechenden erkannten Zelle unter den mehreren erkannten Zellen;
Anzeigen sowohl eines Editiergebiets (604), um es dem Benutzer zu ermöglichen, die erkannten Zeichen (605) von der ausgewählten einen erkannten Zelle entsprechenden Zeichenbildern zu editieren, als auch von Bedienelementen (603) zum Ändern der Position und Größe der ausgewählten einen erkannten Zelle auf der Anzeigeeinheit, falls die eine erkannte Zelle ausgewählt ist; und
Ersetzen, falls die angezeigten erkannten Zeichen im angezeigten Editiergebiet in einen anderen Text editiert werden, der der
ausgewählten einen erkannten Zelle im Scanbild entsprechenden Zeichenbilder mit dem editierten anderen Text.

7. Informationsverarbeitungsverfahren nach Anspruch 6, ferner umfassend einen Schritt des Änderns der Position und Größe der einen der erkannten Zellen basierend auf Positionen der betätigten Bedienelemente, falls die angezeigten Bedienelemente von einem Benutzer betätigt werden.

8. Informationsverarbeitungsverfahren nach Anspruch 6, wobei, falls eine andere erkannte Zelle ausgewählt wird, nachdem die angezeigten erkannten Zeichen in einen anderen Text im angezeigten Editiergebiet editiert werden, die der ausgewählten einen erkannten Zelle entsprechenden Zeichenbilder mit dem editierten anderen Text ersetzt werden und neue Bedienelemente zum Ändern der Position und Größe der ausgewählten anderen erkannten Zelle angezeigt werden.

9. Informationsverarbeitungsverfahren nach Anspruch 6, wobei, falls die angezeigten erkannten Zeichen in einen anderen Text im angezeigten Editiergebiet editiert werden, die der ausgewählten einen erkannten Zelle im Scanbild entsprechenden Zeichenbilder mit dem editierten anderen Text ersetzt werden, und zwar durch Löschen der der ausgewählten einen erkannten Zelle im Scanbild entsprechenden Zeichenbilder und Anordnen des editierten anderen Textes an einer Position der der ausgewählten einen erkannten Zelle im Scanbild entsprechenden Zeichenbilder.

10. Informationsverarbeitungsverfahren nach Anspruch 9, wobei, falls sich die Positionen der Zeichenbilder links in der ausgewählten einen erkannten Zelle befinden, die der ausgewählten einen erkannten Zelle im Scanbild entsprechenden Zeichenbilder mit dem editierten anderen Text ersetzt werden, und zwar durch Löschen der der ausgewählten einen erkannten Zelle im Scanbild entsprechenden Zeichenbilder und Anordnen des anderen Textes an einer den der ausgewählten einen erkannten Zelle im Scanbild entsprechenden gelöschten Zeichenbildern entsprechenden linken Position, und wobei, falls sich die Positionen der Zeichenbilder rechts in der ausgewählten einen erkannten Zelle befinden, die der ausgewählten einen erkannten Zelle im Scanbild entsprechenden Zeichenbilder mit dem editierten anderen Text ersetzt werden, und zwar durch Löschen der der ausgewählten einen erkannten Zelle im Scanbild entsprechenden Zeichenbilder und Anordnen des anderen Textes an einer den der ausgewählten einen erkannten Zelle im Scanbild entsprechenden gelöschten Zeichenbildern entsprechenden rechten Position.

**11.** Computerprogramm, umfassend Anweisungen, welche bei Ausführung auf einem Computer diesen veranlassen, das Verfahren nach einem der Ansprüche 6 bis 10 durchzuführen.

**12.** Computerlesbares Speichermedium, auf dem das Programm nach Anspruch 11 gespeichert ist.

**Revendications**

**1.** Appareil de traitement d'informations, comprenant :

une unité d'affichage (204) ;
un moyen de réception d'image (201) configuré pour recevoir une image de balayage générée par un balayage d'un document au moyen d'un dispositif de balayage (101) ;
un premier moyen de commande (203) configuré pour identifier une pluralité de cellules reconnues par une analyse de l'image de balayage, où les cellules reconnues sont des régions entourées par des lignes réglées formant une région de table comprise dans l'image de balayage et/ou des rectangles circonscrits de groupes de pixels blancs détectés à partir d'une région de table comprise dans l'image de balayage ; et
un deuxième moyen de commande (203) configuré pour obtenir des caractères reconnus par une application d'un traitement de reconnaissance de caractères optique à des images de caractères comprises dans les cellules reconnues ;
l'appareil étant **caractérisé en ce qu'**il comprend en outre :

un troisième moyen de commande (203) configuré pour commander l'unité d'affichage de façon à afficher l'image de balayage avec des lignes réglées entourant la pluralité de cellules reconnues ;
un moyen de réception (205) configuré pour recevoir une position qui est désignée par un utilisateur sur l'image de balayage affichée ;
un moyen de détermination (203) configuré pour déterminer, si la position désignée se trouve à l'intérieur de l'une de la pluralité de cellules reconnues, que ladite cellule reconnue correspondant à la position désignée est sélectionnée à partir de la pluralité de cellules reconnues ; et
un quatrième moyen de commande (203) configuré pour commander l'unité d'affichage de façon à afficher, si le moyen de détermination détermine que ladite cellule reconnue est sélectionnée, à la fois une région d'édition (604) pour permettre à l'utilisateur d'éditer les caractères reconnus (605) d'images de caractères correspondant à ladite cellule reconnue sélectionnée et des poignées (603) permettant de modifier la position et la taille de ladite cellule reconnue sélectionnée ; et
un cinquième moyen de commande (203) configuré, si les caractères reconnus affichés sont édités en un autre texte sur la région d'édition affichée, pour remplacer les images de caractères correspondant à ladite cellule reconnue dans l'image de balayage par l'autre texte édité.

**2.** Appareil de traitement d'informations selon la revendication 1, comprenant en outre un sixième moyen de commande (203) configuré, dans le cas dans lequel les poignées affichées sont mises en œuvre par un utilisateur, pour modifier la position et la taille de ladite cellule des cellules reconnues sur la base de positions des poignées mises en œuvre.

**3.** Appareil de traitement d'informations selon la revendication 1, dans lequel, dans le cas dans lequel une autre cellule reconnue est sélectionnée après l'édition des caractères reconnus affichés en un autre texte sur la région d'édition affichée, le cinquième moyen de commande remplace des images de caractères correspondant à ladite cellule reconnue sélectionnée par l'autre texte édité et affiche en outre de nouvelles poignées permettant de modifier la position et la taille de l'autre cellule reconnue sélectionnée.

**4.** Appareil de traitement d'informations selon la revendication 1, dans lequel, dans le cas dans lequel les caractères reconnus affichés sont édités en un autre texte sur la région d'édition affichée, le cinquième moyen de commande remplace les images de caractères correspondant à ladite cellule reconnue dans l'image de balayage par l'autre texte édité par une suppression des images de caractères correspondant à ladite cellule reconnue sélectionnée dans l'image de balayage et par une disposition de l'autre texte édité à une position des images de caractères correspondant à ladite cellule reconnue sélectionnée dans l'image de balayage.

**5.** Appareil de traitement d'informations selon la revendication 4, dans lequel, dans un cas dans lequel les positions des images de caractères sont à gauche dans ladite cellule reconnue sélectionnée, le cinquième moyen de commande remplace les images de caractères correspondant à ladite cellule reconnue sélectionnée dans l'image de balayage par l'autre texte édité par une suppression des images de caractères correspondant à ladite cellule reconnue sélectionnée dans l'image de balayage et par une disposition de l'autre texte à une position à gauche correspondant aux images de caractères supprimées correspondant à ladite cellule reconnue sélectionnée dans l'image de balayage, et

dans lequel, dans un cas dans lequel les positions des images de caractères sont à droite dans ladite cellule reconnue sélectionnée, le cinquième moyen de commande remplace les images de caractères correspondant à ladite cellule reconnue sélectionnée dans l'image de balayage par l'autre texte édité par une suppression des images de caractères correspondant à ladite cellule reconnue sélectionnée dans l'image de balayage et par une disposition de l'autre texte à une position à droite correspondant aux images de caractères supprimées correspondant à ladite cellule reconnue sélectionnée dans l'image de balayage.

6. Procédé de traitement d'informations, comprenant les étapes consistant à :

recevoir une image de balayage générée par un balayage d'un document au moyen d'un dispositif de balayage (101) ;

identifier une pluralité de cellules reconnues par une analyse de l'image de balayage, où les cellules reconnues sont des régions entourées par des lignes réglées formant une région de table comprise dans l'image de balayage et/ou des rectangles circonscrits de groupes de pixels blancs détectés à partir d'une région de table comprise dans l'image de balayage ; et

obtenir des caractères reconnus par une application d'un traitement de reconnaissance de caractères optique à des images de caractères comprises dans les cellules reconnues ;

le procédé étant **caractérisé en ce qu'**il comprend en outre les étapes consistant à :

afficher, sur une unité d'affichage, l'image de balayage avec des lignes réglées entourant la pluralité de cellules reconnues ;

recevoir une position qui est désignée par un utilisateur sur l'image de balayage affichée ;

sélectionner, à partir de la pluralité de cellules reconnues, une cellule reconnue correspondant à la position désignée ;

afficher, sur l'unité d'affichage, dans le cas dans lequel ladite cellule reconnue est sélectionnée, à la fois une région d'édition (604) pour permettre à l'utilisateur d'éditer les caractères reconnus (605) d'images de caractères correspondant à ladite cellule reconnue sélectionnée et des poignées (603) permettant de modifier la position et la taille de ladite cellule reconnue sélectionnée ; et

remplacer, dans le cas dans lequel les caractères reconnus affichés sont édités en un autre texte sur la région d'édition affichée, les images de caractères correspondant à ladite cellule reconnue dans l'image de balayage par l'autre texte édité.

7. Procédé de traitement d'informations selon la revendication 6, comprenant en outre une étape de modification, dans le cas dans lequel les poignées affichées sont mises en œuvre par un utilisateur, de la position et de la taille de ladite cellule des cellules reconnues sur la base de positions des poignées mises en œuvre.

8. Procédé de traitement d'informations selon la revendication 6, dans lequel, dans le cas dans lequel une autre cellule reconnue est sélectionnée après l'édition de caractères reconnus affichés en un autre texte sur la région d'édition affichée, les images de caractères correspondant à ladite cellule reconnue sélectionnée sont remplacées par l'autre texte édité, et de nouvelles poignées permettant de modifier la position et la taille de l'autre cellule reconnue sélectionnée sont affichées.

9. Procédé de traitement d'informations selon la revendication 6, dans lequel, dans le cas dans lequel les caractères reconnus affichés sont édités en un autre texte sur la région d'édition affichée, les images de caractères correspondant à ladite cellule reconnue sélectionnée dans l'image de balayage sont remplacées par l'autre texte édité par une suppression des images de caractères correspondant à ladite cellule reconnue sélectionnée dans l'image de balayage et par une disposition de l'autre texte édité à une position des images de caractères correspondant à ladite cellule reconnue sélectionnée dans l'image de balayage.

10. Procédé de traitement d'informations selon la revendication 9, dans lequel, dans un cas dans lequel les positions des images de caractères sont à gauche dans ladite cellule reconnue sélectionnée, les images de caractères correspondant à ladite cellule reconnue sélectionnée dans l'image de balayage sont remplacées par l'autre texte édité par une suppression des images de caractères correspondant à ladite cellule reconnue sélectionnée dans l'image de balayage et par une disposition de l'autre texte à une position à gauche correspondant aux images de caractères supprimées correspondant à ladite cellule reconnue sélectionnée dans l'image de balayage, et dans lequel, dans un cas dans lequel les positions des images de caractères sont à droite dans ladite cellule reconnue sélectionnée, les images de caractères correspondant à ladite cellule reconnue sélectionnée dans l'image de balayage sont remplacées par l'autre texte édité par une suppression des images de caractères correspondant à ladite cellule reconnue sélectionnée dans l'image de balayage et par une disposition de l'autre texte à une position à droite correspondant aux images de caractères supprimées correspondant à ladite cellule reconnue sélectionnée dans l'image de balayage.

11. Programme informatique comprenant des instructions qui, lorsqu'elles sont exécutées sur un ordinateur, amènent un ordinateur à mettre en œuvre le procédé selon l'une quelconque des revendications 6 à 10.

12. Support d'informations lisible par ordinateur contenant en mémoire le programme selon la revendication 11.

# FIG. 1

100

**COPYING MACHINE**

| SCANNER | 101 |

| TRANSMITTING AND RECEIVING UNIT | 102 |

| PRINTER | 103 |

FIG. 2

200

INFORMATION PROCESSING
APPARATUS

| TRANSMITTING AND RECEIVING UNIT | 201 |

| STORAGE UNIT | 202 |

| CONTROL UNIT | 203 |

| DISPLAY UNIT | 204 |

| RECEIVING UNIT | 205 |

# FIG. 3

# Invoice

| | |
|---|---|
| Invoice# | ABC123456 |
| Date: | 07/28/2014 |
| Deadline: | 09/30/2014 |

**SOLD TO**

Kawasaki BlackBlue  Co.,Ltd.

53, Imai Kamicho,
Nakahara-ku Kawasaki-shi,
Kanagawa, 〒211-8501

Tel    044-987-6543
Fax    044-987-6544

**SENDER**

Tokyo AOAK Inc.

3-30-2, Shimomaruko,
Ota-ku, Tokyo,
〒146-8501

Tel    03-3456-7890
Fax    03-3456-0987

| Description | Quantity | Unit  Price | Amount |
|---|---|---|---|
| Stuffed  Toy | 100 | 1,200 | 120,000 |
| Gym  Bag | 50 | 3,500 | 175,000 |
| Wallet | 100 | 2,000 | 200,000 |
| Home Uniform | 20 | 8,000 | 160,000 |
| Away Uniform | 20 | 8,000 | 160,000 |
| | | | |
| | | | |

| | |
|---|---|
| Subtotal | ¥ 8 1 5 0 0 0 |
| Tax 8% | ¥ 6 5 2 0 0 |
| Sum Total | ¥ 8 8 0 2 0 0 |

**DIRECT ALL INQUIRIES TO**: Morishige
Emai: Oden-Morige@Tokyo.aoak.com

THANK YOU FOR YOUR BUSINESS!!

# FIG. 4

# Invoice

Invoice#    ABC123456
Date:      07/28/2014
Deadline:   09/30/2014

401

SOLD TO

Kawasaki BlackBlue Co.,Ltd.

53, Imai Kamicho,
Nakahara-ku Kawasaki-shi,
Kanagawa, 〒211-8501

Tel   044-987-6543
Fax  044-987-6544

402

SENDER

Tokyo AOAK Inc.

3-30-2, Shimomaruko,
Ota-ku, Tokyo,
〒146-8501

Tel   03-3456-7890
Fax  03-3456-0987

403 404 406 407 405

| Description | Quantity | Unit Price | Amount |
|---|---|---|---|
| Stuffed Toy | 100 | 1,200 | 120,000 |
| Gym Bag | 50 | 3,500 | 175,000 |
| Wallet | 100 | 2,000 | 200,000 |
| Home Uniform | 20 | 8,000 | 160,000 |
| Away Uniform | 20 | 8,000 | 160,000 |
|  |  |  |  |
|  |  |  |  |

Subtotal   ¥815000

Tax 8%   ¥65200

Sum Total   ¥880200

DIRECT ALL INQUIRIES TO: Morishige
Emai: Oden-Morige@Tokyo.aoak.com

THANK YOU FOR YOUR BUSINESS!!

# FIG. 5

# Invoice

| | |
|---|---|
| Invoice# | ABC123456 |
| Date: | 07/28/2014 |
| Deadline: | 09/30/2014 |

**SOLD TO**

Kawasaki BlackBlue Co.,Ltd.

53, Imai Kamicho,
Nakahara-ku Kawasaki-shi,
Kanagawa, 〒211-8501

Tel    044-987-6543
Fax    044-987-6544

**SENDER**

Tokyo AOAK Inc.

3-30-2, Shimomaruko,
Ota-ku, Tokyo,
〒146-8501

Tel    03-3456-7890
Fax    03-3456-0987

| Description | Quantity | Unit Price | Amount |
|---|---|---|---|
| Stuffed Toy | 100 | 1,200 | 120,000 |
| Gym Bag | 50 | 3,500 | 175,000 |
| Wallet | 100 | 2,000 | 200,000 |
| Home Uniform | 20 | 8,000 | 160,000 |
| Away Uniform | 20 | 8,000 | 160,000 |
| | | | |
| | | | |

| | |
|---|---|
| Subtotal | ¥ 8 1 5 0 0 0 |
| Tax 8% | ¥ 6 5 2 0 0 |
| Sum Total | ¥ 8 8 0 2 0 0 |

**DIRECT ALL INQUIRIES TO**: Morishige
            Emai: Oden-Morige@Tokyo.aoak.com

THANK YOU FOR YOUR BUSINESS!!

# FIG. 6

# Invoice

Invoice#    ABC123456
Date:       07/28/2014
Deadline:    09/30/2014

SOLD TO

Kawasaki BlackBlue Co.,Ltd.

53, Imai Kamicho,
Nakahara-ku Kawasaki-shi,
Kanagawa, 〒211-8501

Tel    044-987-6543
Fax   044-987-6544

SENDER

Tokyo AOAK Inc.

3-30-2, Shimomaruko,
Ota-ku, Tokyo,
〒146-8501

120,000

OK    Apply    Cancel

| Description | Quantity | Unit Price | Amount |
|---|---|---|---|
| Stuffed Toy | 100 | 1,200 | 120,000 |
| Gym Bag | 50 | 3,500 | 175,000 |
| Wallet | 100 | 2,000 | 200,000 |
| Home Uniform | 20 | 8,000 | 160,000 |
| Away Uniform | 20 | 8,000 | 160,000 |
|  |  |  |  |
|  |  |  |  |

| | ¥ | 8 | 1 | 5 | 0 | 0 | 0 |
|---|---|---|---|---|---|---|---|
| Subtotal | | | | | | | |
| Tax 8% | | ¥ | 6 | 5 | 2 | 0 | 0 |
| Sum Total | ¥ | 8 | 8 | 0 | 2 | 0 | 0 |

DIRECT ALL INQUIRIES TO: Morishige
Emai: Oden-Morige@Tokyo.aoak.com

THANK YOU FOR YOUR BUSINESS!!

# FIG. 7

# Invoice

Invoice#    ABC123456
Date:       07/28/2014
Deadline:   09/30/2014

SOLD TO

Kawasaki BlackBlue  Co.,Ltd.

53, Imai Kamicho,
Nakahara-ku Kawasaki-shi,
Kanagawa, 〒211-8501

Tel    044-987-6543
Fax    044-987-6544

SENDER

Tokyo AOAK Inc.

3-30-2, Shimomaruko,
Ota-ku, Tokyo,
〒146-8501

```
701  605

300,000  607
```

| OK | Apply | Cancel |

| Description | Quantity | Unit Price | Amount | |
|---|---|---|---|---|
| Stuffed  Toy | 100 | 1,200 | 300,000 | 703 / 702 |
| Gym Bag | 50 | 3,500 | 175,000 | |
| Wallet | 100 | 2,000 | 200,000 | |
| Home Uniform | 20 | 8,000 | 160,000 | |
| Away Uniform | 20 | 8,000 | 160,000 | |
| | | | | |
| | | | | |

Subtotal     ¥ 8 1 5 0 0 0

Tax 8%        ¥ 6 5 2 0 0

Sum Total    ¥ 8 8 0 2 0 0

DIRECT ALL INQUIRIES TO: Morishige
                         Emai: Oden-Morige@Tokyo.aoak.com

THANK YOU FOR YOUR BUSINESS!!

FIG. 8

SELECT RECOGNIZED
CELL — S801

DISPLAY EDITING
WINDOW AND HANDLES — S802

TEXT EDITING                    HANDLE OPERATIONS

FIG. 9 — S803          FIG. 10 — S804

FIG. 9

S803

↓

HIDE RECOGNIZED CELL
POSITION CHANGE HANDLES — S901

↓

DISPLAY POST-EDIT TEXT IN
EDITING WINDOW — S902

↓

ANOTHER
RECOGNIZED CELL,
APPLY, OK, OR CANCEL
SELECTED? S903

CANCEL → END

ANOTHER RECOGNIZED CELL, APPLY, OR OK

↓

DELETE INSIDE SELECTED
RECOGNIZED CELL — S904

↓

ARRANGE POST-EDIT TEXT IN
RECOGNIZED CELL — S905.1

↓

DISPLAY POST-EDIT
SCAN IMAGE — S905.2

↓

ANOTHER
RECOGNIZED CELL SELECTED,
APPLY, OR OK
SELECTED? S906

OK → END

ANOTHER
RECOGNIZED
CELL
SELECTED

APPLY →

DISPLAY TEXT POSITION
CHANGE HANDLES — S907

↓

CHANGE TEXT POSITION — S908

↓

ANOTHER
RECOGNIZED CELL SELECTED,
OK, OR CANCEL
SELECTED? S909

OK → END

ANOTHER
RECOGNIZED
CELL
SELECTED

CANCEL ↓

DESELECT RECOGNIZED CELL — S910

↓

END

S802

# FIG. 10

```
        ( S804 )
            │
            ▼
  ┌─────────────────────┐
  │  CHANGE RECOGNIZED  │──S1001
  │    CELL POSITION    │
  └─────────────────────┘
            │
            ▼
( WAIT UNTIL TEXT EDITING IS PERFORMED )
```

# FIG. 11

```
        ┌──────────┐
        │  S905.1  │
        └──────────┘
              │
              ▼
  ┌─────────────────────┐
  │ ACQUIRE COORDINATES │   S1101
  │ OF RECOGNIZED CELL  │
  │  AND TEXT REGIONS   │
  └─────────────────────┘
              │
              ▼
  ┌─────────────────────┐
  │  SET REFERENCE LINE │   S1102
  └─────────────────────┘
              │
              ▼
  ┌─────────────────────┐
  │  ARRANGE POST-EDIT  │   S1103
  │        TEXT         │
  └─────────────────────┘
              │
              ▼
        ┌──────────┐
        │  S905.2  │
        └──────────┘
```

# FIG. 12

S908

S1201

POST-EDIT TEXT
POSITION CHANGED?

NO

YES

S1202

POST-EDIT TEXT
EXCEEDS RECOGNIZED
CELL?

NO

YES

MOVE POST-EDIT
TEXT BACK INSIDE
RECOGNIZED CELL

S1203

S909

# FIG. 13

# Invoice

| | |
|---|---|
| Invoice# | ABC123456 |
| Date: | 07/28/2014 |
| Deadline: | 09/30/2014 |

SOLD TO

Kawasaki BlackBlue Co.,Ltd.

53, Imai Kamicho,
Nakahara-ku Kawasaki-shi,
Kanagawa, 〒211-8501

Tel    044-987-6543
Fax    044-987-6544

SENDER

Tokyo AOAK Inc.

3-30-2, Shimomaruko,
Ota-ku, Tokyo,
〒146-8501

Tel    03-3456-7890
Fax    03-3456-0987

| Description | Quantity | Unit Price | Amount |
|---|---|---|---|
| Stuffed Toy | 100 | 1,200 | 120,000 |
| Gym Bag | 50 | 3,500 | 175,000 |
| Wallet | 100 | 2,000 | 200,000 |
| Home Uniform | 20 | 8,000 | 160,000 |
| Away Uniform | 20 | 8,000 | 160,000 |

| | |
|---|---|
| Subtotal | ¥ 8 1 5 0 0 0 |
| Tax 8% | ¥ 6 5 2 0 0 |
| Sum Total | ¥ 8 8 0 2 0 0 |

DIRECT ALL INQUIRIES TO: Morishige
Emai: Oden-Morige@Tokyo.aoak.com

THANK YOU FOR YOUR BUSINESS!!

FIG. 14

# FIG. 15

S1102

S1501
TARGET TEXT
BELONGS TO TABLE?

YES

NO

S1506
ACQUIRE TEXT REGION OF
WHICH DIFFERENCE BETWEEN
X-COORDINATES OF RIGHT
SIDES ≤ THRESHOLD
VALUE, AND IS SMALLEST

S1502
ACQUIRE MARGINS
BETWEEN RECOGNIZED
CELL AND TEXT REGION

S1507
ACQUIRE TEXT REGION OF
WHICH DIFFERENCE BETWEEN
X-COORDINATES OF LEFT
SIDES ≤ THRESHOLD VALUE,
AND IS SMALLEST

S1503
(LEFT MARGIN)
≥
(RIGHT MARGIN)

NO

YES

S1508
(DIFFERENCE BETWEEN
LEFT SIDES) ≥
(DIFFERENCE BETWEEN RIGHT-
HAND SIDES)

YES

NO

S1504
SET REFERENCE LINE
TO RIGHT SIDE OF
TEXT REGION

S1505
SET REFERENCE LINE
TO LEFT SIDE OF TEXT
REGION

S1103

**EP 2 966 578 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001094760 A
- US 20030123727 A
- US 2011002547 A